(19) Europäisches Patentamt
European Patent Office
Office européen des brevets

(11) **EP 3 228 456 B1**

(12) **EUROPÄISCHE PATENTSCHRIFT**

(45) Veröffentlichungstag und Bekanntmachung des Hinweises auf die Patenterteilung:
**21.10.2020   Patentblatt 2020/43**

(51) Int Cl.:
**B32B 27/08** *(2006.01)*        **B32B 27/36** *(2006.01)*
**B32B 15/08** *(2006.01)*

(21) Anmeldenummer: **17163508.9**

(22) Anmeldetag: **29.03.2017**

(54) **BIAXIAL ORIENTIERTE POLYESTERFOLIE FÜR DIE METALLLAMINIERUNG**

BIAXIALLY ORIENTED POLYESTER FILM FOR METAL LAMINATION

FEUILLE EN POLYESTER ORIENTÉE DE MANIÈRE BIAXIALE POUR LE LAMINAGE DE MÉTAL

(84) Benannte Vertragsstaaten:
**DE ES FR GB LU NL**

(30) Priorität: **08.04.2016   DE 102016205913**

(43) Veröffentlichungstag der Anmeldung:
**11.10.2017   Patentblatt 2017/41**

(73) Patentinhaber: **Mitsubishi Polyester Film GmbH**
**65203 Wiesbaden (DE)**

(72) Erfinder:
  • **Konrad, Matthias**
    **65830 Kriftel (DE)**
  • **Kuhmann, Bodo**
    **65594 Runkel (DE)**
  • **Ehrhardt, David**
    **65239 Hochheim (DE)**

  • **Herbst, Thiemo**
    **55116 Mainz (DE)**
  • **Kliesch, Holger**
    **65462 Ginsheim (DE)**
  • **Bennett, Cynthia**
    **55252 Alzey (DE)**

(74) Vertreter: **Schweitzer, Klaus**
    **Plate Schweitzer Zounek**
    **Patentanwälte**
    **Rheingaustrasse 196**
    **65203 Wiesbaden (DE)**

(56) Entgegenhaltungen:
**EP-A1- 1 647 398         EP-A1- 3 178 651**
**EP-A2- 2 045 075         WO-A1-01/53080**
**US-A1- 2014 162 051**

## Beschreibung

### Gebiet der Erfindung

Die Erfindung betrifft eine mehrschichtige biaxial orientierte Polyesterfolie umfassend eine Basisschicht B, eine amorphe Deckschicht A und eine weitere Deckschicht C, wobei sich diese Polyesterfolie zur Laminierung mit Blechen eignet. Insbesondere betrifft die Erfindung Polyesterfolien, die bevorzugt aus antimonfreien Polyestern hergestellt sind und Radikalfänger enthalten. In einer Ausgestaltung der Erfindung betrifft diese eine Polyesterfolie, welche in der Basisschicht (bezogen auf die Masse an Polyester) 2 bis 15 Gew.-% Isophthalat-abgeleitete Einheiten enthält und in der amorphen Schicht A mehr als 19 Gew.-% Isophthalat-abgeleitete Einheiten enthält und die auf der Deckschicht A mit einer Silan-basierten Beschichtung versehen ist. Weiterhin betrifft die Erfindung ein Verfahren zur Herstellung dieser Folien.

### Hintergrund

Polyesterfolien haben aufgrund ihrer hervorragenden optischen und mechanischen Eigenschaften vielseitige Anwendungsgebiete. Ein Anwendungsgebiet ist die Blechlaminierung, bei der die Polyesterfolie auf ein Metallblech laminiert wird.

Die Laminierung erfolgt zum Schutz der Bleche gegen Korrosion bzw. zu dekorativen Zwecken (Bedruckung). Bei Metalldosen, welche aus folienlaminierten Blechen hergestellt werden, dient die auf der Innenseite auflaminierte Folie als Barriere zwischen verpacktem Gut und Metall. So verhindert die Folie einerseits die Diffusion von korrosiven Bestandteilen des Verpackungsgutes zum Metall und anderseits die Diffusion von Korrosionsprodukten in das Verpackungsgut. Eine auf die Außenseite auflaminierte Folie dient neben dem Korrosionsschutz in der Regel dekorativen Zwecken.

Gewöhnlich werden Blech-Folienlaminate hergestellt, indem man beispielsweise eine mehrschichtige, siegelfähige Folie mit einem auf eine hohe Temperatur aufgeheizten Blech zusammenbringt. Eine weitere Möglichkeit besteht darin, die Folie mittels eines Klebers auf das Blech aufzukleben. Hierbei werden entweder lösungsmittelbasierende Kleber oder Hotmelts verwendet.

Die Folien gemäß vorliegender Erfindung eignen sich besonders zur Laminierung bei hoher Temperatur auf Aluminium. Aufgrund des gegenüber einer (reinen) PET-Folie niedrigeren Schmelzpunkts kann die erfindungsgemäße Folie im Laminat mit Aluminium aufgeschmolzen werden ohne die mechanischen Eigenschaften des Aluminiums negativ zu beeinflussen. Durch das Schmelzen der Folie lässt sich das Laminat verformen ohne Risse in der Folie zu verursachen.

### Stand der Technik

In der GB-A-1 465 973 wird eine dicke koextrudierte, zweischichtige Polyesterfolie beschrieben, deren eine Schicht aus isophthalsäure- und terephthalsäurehaltigen Copolyestern und deren andere Schicht aus Polyethylenterephthalat besteht. Über die Haftung der Folie zu Metall finden sich in der Schrift keine Angaben. Wegen fehlender Pigmentierung ist die Folie nicht wickelbar und nicht weiterverarbeitbar.

In der EP-B-312304 wird ein Prozess beschrieben, um eine mehrschichtige Polyesterfolie auf Metall zu laminieren. Dazu wird das Blech vorgeheizt, die Folie auflaminiert und anschließend aufgeschmolzen und abgeschreckt. Um eine gute Verformbarkeit des Blechlaminats zu erreichen, werden Prozesstemperaturen von mindestens 260 °C genannt. Die Polyesterfolie besteht aus einer inneren nichtkristallinen Schicht mit einem Schmelzpunkt kleiner als 250 °C und einer äußeren kristallinen Schicht mit einem Schmelzpunkt über 220 °C Der Polyester der nichtkristallinen Schicht ist typischerweise ein Copolyester aus 80 % Ethylenterephthalat und 20 % Ethylenisophthalat. Entsprechende Folien in den Beispielen haben eine Dicke von 15 $\mu$m.

In der EP-B-474 240 werden Polyesterfolien für die Blechlaminierung beschrieben, die aus einem Copolyester mit einem Schmelzpunkt zwischen 210 und 245 °C bestehen. In den Beispielen sind Copolyester mit einem Isophthalsäuregehalt von 9 bis 12 Mol-% genannt. Die laminierten Bleche werden zu tiefgezogenen Dosen für die Lebensmittelverpackung verarbeitet. Die genannten Folien sind Monofolien ohne Siegelschicht und zeigen eine zu geringe Haftung zu Aluminium.

In der EP-A-586 161 werden einschichtige Polyesterfolien für die Laminierung auf Blech beschrieben, die einen Copolyester mit einem Schmelzpunkt zwischen 210 und 245 °C und zwei verschieden große Partikel mit einem mittleren Durchmesser von 0.05 bis 0.6 $\mu$m und 0.3 bis 2.5 $\mu$m enthält. Die laminierten Bleche werden zu tiefgezogenen Dosen für die Lebensmittelverpackung verarbeitet. Die Folien sollen eine gute Hitzebeständigkeit haben und den Geschmack des Füllgutes nicht verändern.

## Aufgabe

Die Folien gemäß dem Stand der Technik sind nachteilig, weil sie bei der für Aluminium geeigneten Aufschmelztemperatur keine ausreichende Haftung zeigen. Die unzureichende Haftung macht sich insbesondere im Kontakt mit Lebensmitteln oder deren Ersatzstoffen und bei der Pasteurisierung bzw. Sterilisierung in Kontakt mit diesen Füllgütern bemerkbar. Außerdem weisen sie eine zu geringe Verformbarkeit und eine ungenügende Korrosionsbeständigkeit auf.

Aufgabe der vorliegenden Erfindung war es eine Polyesterfolie zu finden, die sich für die Laminierung auf Aluminium eignet. Die Folie soll im Laminat eine gute Haftung zeigen und hohen Korrosionsschutz für das Aluminium bieten. Weiterhin soll sich das Laminat für den direkten Kontakt mit Lebensmitteln eignen und selbst bei längerer Temperaturbelastung die mechanische Stabilität behalten und dabei niedrige Antimon Migrationswerte aufweisen.

## Lösung der Aufgabe

Die Aufgabe wird erfindungsgemäß durch die Bereitstellung einer koextrudierten, mehrschichtigen, biaxial orientierten Polyesterfolie mit einer kristallinen Basisschicht B, einer amorphen Deckschicht A und einer kristallinen Deckschicht C gelöst. Die amorphe Deckschicht A trägt bevorzugt eine silanhaltige Beschichtung.

## Detailbeschreibung

Die erfindungsgemäße Polyesterfolie besteht aus Polyester, Additiven und bevorzugt einer Beschichtung.

## Basismaterial

Die Basisschicht der erfindungsgemäßen Folie ist kristallin und hat einen Schmelzpunkt von kleiner als 250 °C, bevorzugt kleiner 245 °C. Durch die Kristallinität hat die Folie eine gute mechanische Festigkeit, kann wirtschaftlich hergestellt werden und ist gut zu verarbeiten.

In einer möglichen Ausführung besteht der Polyester der Basisschicht B der Folie zu mindestens 85 Gew.-%, bevorzugt mindestens 90 Gew.-%, besonders bevorzugt mindestens 92 Gew.-% aus Ethylenterephthalat-abgeleiteten Einheiten und zu 2 bis 15 Gew.-%, bevorzugt 3 bis 10 Gew.-%, besonders bevorzugt 4 bis 8 Gew.-% aus Ethylenisophthalat-abgeleiteten Einheiten (jeweils bezogen auf die Gesamtmasse an Polyester). Die Summe aus Ethylenterephthalat-abgeleiteten Einheiten und Ethylenisophthalat-abgeleiteten Einheiten beträgt mindestens 95 Gew.-% des Polyesters.

Die restlichen, von Carbonsäuren bzw. Alkoholen abgeleiteten Einheiten stammen aus anderen aliphatischen oder cycloaliphatischen Diolen bzw. Dicarbonsäuren als Terephthalsäure und Isophthalsäure.

Geeignete andere aliphatische Diole sind beispielsweise Diethylenglykol, Triethylenglykol, aliphatische Glykole der allgemeinen Formel HO-$(CH_2)$n-OH, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoffatomen. Von den cycloaliphatischen Diolen sind Cyclohexandiole (insbesondere Cyclohexan-1,4-diol) bevorzugt.

Andere cycloaliphatische Dicarbonsäuren sind beispielsweise Cyclohexandicarbonsäuren, insbesondere Cyclohexan-1,4-dicarbonsäure. Von den aliphatischen Dicarbonsäuren sind die (C3 bis C19)-Alkandisäuren besonders geeignet, wobei der Alkanteil geradkettig oder verzweigt sein kann.

Verwendet man Polyester mit einem geringeren Gehalt an Ethylenisophthalat-abgeleiteten Einheiten als 2 Gew.-%, so ist der Schmelzpunkt der Folie zu hoch. Verwendet man Polyester mit einem höheren Gehalt an Ethylenisophthalat-abgeleiteten Einheiten als 15 Gew.-%, so verschlechtern sich die Aromabarriere- und Migrationseigenschaften (Wasserdampf-, Gasbarriere) der Folie. Darüber hinaus verschlechtern sich die mechanischen Eigenschaften der Folie, welches sich z. B. in einer verschlechterten Verarbeitbarkeit der Folie bemerkbar macht (sie reißt z. B. leichter).

Optional kann die Basisschicht aus einer Mischung aus Polyethylenterephthalat und Polybutylenterephthalat bestehen. Die Mischung enthält 70 bis 85 Gew.-% Ethylenterephthalat- und 15 bis 30 Gew.-% Butylenterephthalat-abgeleiteten Einheiten. Die restlichen Monomereinheiten stammen aus anderen aliphatischen, cycloaliphatischen oder aromatischen Diolen bzw. Dicarbonsäuren, wie sie oben beschrieben sind. Die Summe aus Ethylenterephthalat-abgeleiteten Einheiten und Butylenterephthalat-abgeleiteten Einheiten beträgt mindestens 95 Gew.-% des Polyesters. Nachteil dieser Mischung ist, dass die beiden Polyester im Extruder umestern und der Grad der Umesterung schwer zu steuern ist.

Die Herstellung der Polyester kann z. B. nach dem Umesterungsverfahren erfolgen. Dabei geht man von Dicarbonsäurediestern und Diolen aus, die mit den üblichen Umesterungskatalysatoren wie Zink-, Calcium-, Lithium-, Magnesium- und Mangan-Salzen umgesetzt werden. Die Zwischenprodukte werden dann in Gegenwart allgemein üblicher Polykondensationskatalysatoren wie zum Beispiel Titan-Salzen polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus. Erfindungsgemäße Polyester sind als Handelsprodukte erhältlich.

Die klassischen Katalysatoren für die Herstellung von Polyestern sind nach wie vor Antimonverbindungen. Manche Antimonverbindungen können - insbesondere in höheren Konzentrationen und bei häufiger Exposition - eine gesundheitsschädliche Wirkung haben. Daher ist in der EU die maximal zulässige Migration von Antimon aus einer Folie in ein Lebensmittel beschränkt. Bei hohen Temperaturen und bei amorphen Polyestern, wie sie nach dem Aufschmelzen der Folie auf einem Blech vorliegen, ist die Antimonmigration erhöht und deswegen eine Reduktion des Antimongehaltes wünschenswert. Antimon aus Polyethylenterephthalat (PET) wird in der Fachpresse als bedenklich diskutiert (z.B. W. Shotyk und M. Krachler in Environ. Sci. Technol., 2007, 41 (5), S. 1560-1563).

Die Ursache dafür, dass Antimonverbindungen nach wie vor als Polykondensationskatalysatoren in Polyesterfolien eingesetzt werden, dürfte darin liegen, dass antimonfreie Folien eine wesentlich geringere Temperaturstabilität als antimonhaltige Folien aufweisen und damit für hohe Temperaturen nicht eingesetzt werden können.

Bei der Laminierung von Polyesterfolie auf Metall treten Temperaturen auf, die höher sind als die Schmelztemperatur der Folie. Unter diesen Bedingungen findet bei titankatalysierten Polyestern ein erheblicher Abbau des Molekulargewichts statt. Dies hat zur Folge, dass bei der Verarbeitung des laminierten Blechs Mikrorisse auftreten, die zu Korrosion des Metalls führen können. Der in der vorliegenden Beschreibung beschriebene Ofentest korreliert mit dem Molekulargewichtsabbau und dient somit als einfache Methode zum Test der Eignung der Folie für die Metalllaminierung. Dem thermischen Abbau titan-katalysierter Polyester kann wie unten beschrieben durch den Zusatz von Stabilisatoren entgegen gewirkt werden.

**Amorphe Deckschicht A:**

Die durch Koextrusion auf die Basisschicht B aufgebrachte amorphe Deckschicht A besteht zu mindestens 19 Gew.-%, bevorzugt mindestens 23 Gew.-%, besonders bevorzugt mindestens 27 Gew.-% aus Ethylenisophthalat-abgeleiteten Einheiten und zu bis zu 81 Gew.-%, bevorzugt 77 Gew.-%, besonders bevorzugt 73 Gew.-% aus Ethylenterephthalat-abgeleiteten Einheiten (jeweils bezogen auf die Gesamtmasse an Polyester in der Deckschicht A). Die restlichen Monomereinheiten stammen aus anderen aliphatischen, cycloaliphatischen oder aromatischen Diolen bzw. Dicarbonsäuren, wie sie auch in der Basisschicht vorkommen können.

**Kristalline Deckschicht C:**

Für die andere, kristalline Deckschicht C können prinzipiell die gleichen Polymere verwendet werden, wie sie zuvor für die kristalline Basisschicht B beschrieben wurden.

Die Deckschicht C wird zur Verbesserung des Wickelverhaltens und der Verarbeitbarkeit mit inerten Partikeln gefüllt. Die Konzentration der inerten Partikel in der Deckschicht C beträgt 0,05 Gew.-% oder mehr, bevorzugt 0,10 Gew.-% oder mehr und besonders bevorzugt 0,15 Gew.-% oder mehr. Die Konzentration der inerten Partikel in dieser Schicht sollte kleiner gleich 0,5 Gew.-% sein bezogen auf die Gesamtmasse der Schicht, da sich sonst die Produzierbarkeit der Folie verschlechtert. Sie richtet sich im Wesentlichen nach den zu erzielenden optischen Eigenschaften der Folie.

In einer bevorzugten Ausführungsform enthält die gesamte Folie Polyester, die mit titanbasierten Katalysatoren hergestellt wurden, und 50 - 10000 ppm eines Radikalfängers, wobei der Gehalt bevorzugt zwischen 100 - 5000 ppm und insbesondere zwischen 150 -1200 ppm liegt. Niedrigere Gehalte als 50 ppm führen tendenziell zu einem Versagen im Ofentest und höhere als 10000 ppm haben keine weitere verbessernde Wirkung auf die Folie und verringern daher nur die Wirtschaftlichkeit und können zu einer Migration des Stabilisators aus der Folie in ein verpacktes Lebensmittel führen. Gehalte oberhalb von 1200 ppm führen zudem tendenziell zur Bildung von Gelen mit hohem Stabilisatorgehalt und einem Gelbstich.

In der Deckschicht C der Folie liegt der Anteil an Radikalfänger bei mindestens 300 ppm, bevorzugt bei mindestens 500 ppm und idealerweise bei mindestens 800 ppm. Unterhalb von 300 ppm wird der Ofentest nicht bestanden.

Geeignete Radikalfänger sind in der EP-A-2810776 beschrieben. Besonders gute Eigenschaften hinsichtlich Thermostabilität, geringer Migration aus der Folie und Gelbfärbung wiesen die Verbindungen mit den CAS-Nr. 1709-70-2, 3135-18-0, 6683-19-8 und 57569-40-1 auf. Diese sind bevorzugte Radikalfänger im Sinne der Erfindung. Besonders bevorzugt sind dabei aus den genannten Gründen die Verbindungen mit den CAS-Nr. 1709-70-2 und 6683-19-8.

**Beschichtung**

Zur Verbesserung der Haftung auf Aluminium wird die Folie auf der Deckschicht (A) mit einem funktionellen Silan beschichtet. Bevorzugt ist die funktionelle Gruppe ein primäres Amin. Das aminofunktionelle Silan wird im unhydrolysierten Zustand durch die allgemeine Formel

$$(R^1)_a Si(R^2)_b (R^3)_c$$

dargestellt, worin $R^1$ eine nicht hydrolysierbare funktionelle Gruppe mit mindestens einer primären Aminogruppe, $R^2$ eine hydrolysierbare Gruppe, wie z.B. eine niedere Alkoxygruppe, eine Acetoxygruppe oder ein Halogenid, und $R^3$ eine unreaktive, nicht hydrolysierbare Gruppe, wie z.B. eine niedere Alkylgruppe oder eine Phenylgruppe, bedeutet; wobei (a) größer oder gleich 1; (b) größer oder gleich 1; (c) größer oder gleich null und a+b+c=4 ist. Niedere Alky- oder Alkoxygruppen sind solche mit 1 bis 4 C-Atomen und Halogenide sind Fluor, Chlor, Brom oder Jod.

Beispiele für dieser Formel gehorchende Aminosilane sind N-2-(Aminoethyl)-3-aminopropyltrimethoxysilan, 3-Aminopropyltrimethoxysilan, 4-Aminobutyltriethoxysilan, 4-Aminobutyldimethylmethoxysilan und p-Aminophenyltrimethoxysilan. Als Silan bevorzugt ist N-2-(Aminoethyl)-3-aminopropyltrimethoxysilan (CAS 1760-24-3).

Im Allgemeinen hydrolysiert man das Aminosilan in Wasser und bringt es nach einem herkömmlichen Verfahren auf eine Seite der Polyesterfolie auf.

Die Herstellung der Beschichtungslösung erfolgt durch Mischen des Aminosilans mit Wasser bei einem Gehalt von etwa 0,2 bis etwa 6 Gew.-%. Gegebenenfalls kann man zur Erleichterung der Hydrolyse eine schwache Säure, wie z.B. Essigsäure, zusetzen, um einen pH-Wert von kleiner 6 zu erreichen. Dabei wird mindestens eine der hydrolysierbaren Gruppen des Silans zu einer Silanolgruppe (SiOH) hydrolysiert. Das Produkt der Hydrolyse des Aminosilans hat vermutlich eine teilhydrolysierte, cyclische Struktur, wobei die Aminogruppe wahrscheinlich ionische Bindungen zum Siliciumteil des Moleküls eingeht. Somit kann sich der Begriff hydrolysiert hier auch auf derartige teilhydrolysierte Strukturen beziehen. Die Beschichtungslösung sollte spätestens 6 Stunden nach der Hydrolyse des Aminosilans eingesetzt werden um ein gutes Ergebnis zu erzielen

Das Aufbringen der Beschichtung auf die amorphe Deckschicht A führt dazu, dass die Folie nicht mehr heißsiegelfähig ist. Überraschenderweise verbessert sich trotzdem die Haftung zu Aluminium.

Die Polyesterfolie kann transparent, weiß oder opak, glänzend oder matt sein. Diese verschiedenen optischen Eigenschaften erreicht man beispielsweise durch die Zugabe von unterschiedlichen Mengen an Additiven wie Bariumsulfat, Calciumcarbonat, amorpher Kieselsäure oder Titandioxid. Diese Additive können sowohl in der Basisschicht als auch in der Deckschicht C enthalten sein.

Bevorzugt enthält die Folie in der Basisschicht eine geringe Menge (kleiner 2 Gew.-%) Titandioxid. Dadurch hat die Folie ein milchig weißes Aussehen, wodurch das beim Sterilisieren auftretende Weißanlaufen (blushing) weniger sichtbar ist.

Die zur Verarbeitung der Folie verwendeten inerten Partikel in der Deckschicht C sind bevorzugt aus amorpher Kieselsäure mit einem d50-Wert von 1-6 $\mu$m.

Bei der Folie liegt die Dicke der amorphen Deckschicht A im Bereich von 0,5 bis 5 $\mu$m, vorzugsweise im Bereich von 0,6 bis 3 $\mu$m, besonders bevorzugt im Bereich von 0,7 bis 2 $\mu$m. Ist die Deckschicht A dünner als 0,5 $\mu$m ist die Metallhaftung nicht ausreichend; ist sie dicker als 5 $\mu$m, ist die Folie zu weich.

Die Gesamtdicke der erfindungsgemäßen Polyesterfolie kann innerhalb bestimmter Grenzen variieren. Sie beträgt 5 bis 20 $\mu$m, vorzugsweise 6 bis 15 $\mu$m, besonders bevorzugt 7 bis 12 $\mu$m, wobei die Schicht B einen Anteil von vorzugsweise 30 bis 90 % an der Gesamtdicke hat. Ist die Folie dünner als 5 $\mu$m, ist der Korrosionsschutz des Bleches nicht gegeben. Ist die Folie dicker als 20 $\mu$m, wirkt sich dies ungünstig auf die Wirtschaftlichkeit des laminierten Bleches aus.

Nach dem Ofentest weist die erfindungsgemäße Folie eine Reißdehnung in jeder Folienrichtung von mehr als 5 %, bevorzugt von mehr als 10 % und idealerweise von mehr als 25 % auf. Vor dem Ofentest liegt die Reißdehnung über 60 %.

Insbesondere wenn die o.g. Radikalfänger in ausreichender Menge zugesetzt werden und ferner dann, wenn die besonders bevorzugten Stabilisatoren verwendet werden weist die erfindungsgemäße Folie nach dem Ofentest einen Anstieg des Gelbwertes b* von weniger als 5, bevorzugt von weniger als 3 und idealerweise von weniger als 1 auf.

Die erfindungsgemäße Folie weist üblicherweise bei 150 °C einen Schrumpf in Längs- und Querrichtung von unter 10 %, bevorzugt unter 5 %, und besonders bevorzugt von unter 2 % auf. Hierdurch wird eine Reduktion der Folienbreite beim Laminieren minimiert.

In einer besonders bevorzugten Ausführungsform besteht die amorphe Deckschicht A aus 27 Gew.-% Ethylenisophthalat-abgeleiteten Einheiten und 72,96 Gew.-% Ethylenterephthalat-abgeleiteten Einheiten und 0,04 Gew.-% Partikel aus amorpher Kieselsäure mit einer mittleren Partikelgröße (d50) von 2,5 $\mu$m. Weiterhin ist diese Deckschicht A mit einer Beschichtung versehen, die von N-2-(Aminoethyl)-3-aminopropyltrimethoxysilan ausgeht und die eine Dicke von 15 nm ausweist.

Die Basisschicht B besteht aus 4 Gew.-% aus Ethylenisophthalat-abgeleiteten Einheiten, 95,5 Gew.-% Ethylenterephthalat-abgeleiteten Einheiten und 0,5 Gew.-% Titandioxid.

Die Deckschicht C besteht aus 4 Gew.-% aus Ethylenisophthalat-abgeleiteten Einheiten, 95,85 Gew.-% Ethylenterephthalat-abgeleiteten Einheiten und 0,15 Gew.-% Partikel aus amorpher Kieselsäure mit einer mittleren Partikelgröße (d50) von 2,5 $\mu$m.

Alle Schichten enthalten einen Radikalfänger in der Konzentration von 500 ppm (aufgrund der geringen Menge des Radikalfängers ist dieser in den 100 Gew.-% der jeweiligen Schichten nicht enthalten).

## Verfahren zur Herstellung

Das Herstellungsverfahren für Polyesterfolien wird z. B. beschrieben im "Handbook of Thermoplastic Polyesters, Ed. S. Fakirov, Wiley-VCH, 2002" oder im Kapitel "Polyesters, Films" in der "Encyclopedia of Polymer Science and Engeneering, Vol. 12, John Wiley & Sons, 1988". Das bevorzugte Verfahren zur Herstellung der Folie enthält folgende Schritte. Die Rohstoffe werden in je einem Extruder pro Schicht aufgeschmolzen und durch eine dreischichtige Breitschlitzdüse auf eine gekühlte Abzugswalze extrudiert. Diese Folie wird anschließend erneut erhitzt und in mindestens einer Richtung - entweder in Maschinenrichtung (MD) oder in Querrichtung (TD) -, bevorzugt aber in Längs- und Querrichtung bzw. in Quer- und Längsrichtung verstreckt ("orientiert"). Die Folientemperaturen im Streckprozess liegen im allgemeinen 10 bis 60 °C über der Glasübergangstemperatur Tg des verwendeten Polyesters, das Streckverhältnis der Längsstreckung liegt üblicherweise bei 2,5 bis 5,0, insbesondere bei 3,0 bis 4,5, das der Querstreckung bei 3,0 bis 5,0, insbesondere bei 3,5 bis 4,5. Die Längsstreckung kann auch gleichzeitig mit der Querstreckung (Simultanstreckung) oder in jeder denkbaren Sequenzfolge durchgeführt werden. Es folgt die Thermofixierung der Folie bei Ofentemperaturen von 180 bis 235 °C, insbesondere von 210 bis 230 °C. Anschließend wird die Folie abgekühlt und aufgewickelt.

Verwendung einer erfindungs- gemäßen Folie zum Laminieren mit Blechen, die vorzugsweise zur Herstellung von Deckeln für Getränkedosen verwendet werden und bei denen das Blech ein Aluminiumblech ist.

## Vorteile der Erfindung

Die erfindungsgemäße Folie zeichnet sich durch eine hervorragende Haftung zu Metall insbesondere zu Aluminium aus. Weiterhin weist die Folie eine gute thermische Beständigkeit auf, d.h. einen geringen Abbau des Molekulargewichts bei hohen Temperaturen wie sie beim Aufschmelzen nach dem Laminieren auf Blech auftreten. Insbesondere eignet sich das Polyester-Aluminium Laminat zur Herstellung von Deckeln für Getränkedosen. Die Zusammensetzung der Folie gewährleistet eine gute Verformbarkeit des Laminats und ein sauberes Aufreißverhalten des Deckels.

Die Folie zeigt schon bei relativ niedrigen Prozesstemperaturen beim Laminieren bzw. Aufschmelzen gute Haftung zu Aluminium, so dass die mechanische Stabilität des Aluminiums nicht beeinträchtigt wird.

Bei der Herstellung der Folie ist gewährleistet, dass das Verschnittmaterial (Regenerat) in einer Menge von bis zu 60 Gew.-%, bezogen auf das Gesamtgewicht der Folie, wieder der Extrusion zugeführt werden kann, ohne dass dabei die physikalischen Eigenschaften der Folie nennenswert negativ beeinflusst werden.

## Eigenschaften

Zur Charakterisierung der Rohstoffe und der Folien wurden die folgenden Messwerte bzw. Messverfahren benutzt:

### Glasübergangstemperatur und Schmelzpunkt

Die Glasübergangstemperatur und der Schmelzpunkt des Polyesters der Deckschicht A wurden mit einem DSC-Gerät (Perkin-Elmer Pyris 1) bestimmt (DIN 53765). Die Probe wurde mit 20 K/min bis 300 °C aufgeheizt und 10 min. bei dieser Temperatur gehalten. Danach wurde die Probe möglichst schnell (500 K/min.) auf 20 °C abgekühlt. Die Probe wurde 10 min bei 20°C gehalten und mit 20 K/min bis 300 °C aufgeheizt. Um eine bessere Reproduzierbarkeit zu erzielen, wurden die Werte der zweiten Aufheizung verwendet.

### Mechanische Eigenschaften

Der E-Modul, die Reißfestigkeit, Reißdehnung und der F5-Wert werden in Längs- und Quer-richtung nach ISO 527 - 1 und 527 - 3 mit Hilfe eines Zug-Dehnungsmesser (Typ 010 der Fa. Zwick/DE) gemessen.

### Standardviskosität (SV)

Die Standardviskosität SV wird - angelehnt an DIN 53726 - durch die Messung einer 1 Gew.-%igen Lösung in Dichloressigsäure (DCE) in einem Ubbelohde Viskosimeter bei 25 °C bestimmt. Aus der relativen Viskosität ($\eta_{rel}$) wird der dimensionslose SV-Wert wie folgt ermittelt:

$$SV = (\eta_{rel}-1) \times 1000$$

Folie bzw. Polymerrohstoffe wurden dazu in DCE gelöst. Der Anteil an Partikeln wurde mittels Aschebestimmung ermittelt und durch entsprechende Mehreinwaage korrigiert.

*Schrumpf*

Der thermische Schrumpf wird an quadratischen Folienmustern mit einer Kantenlänge von 10 cm bestimmt. Die Proben werden so ausgeschnitten, dass eine Kante parallel zur Maschinenrichtung und eine Kante senkrecht zur Maschinenrichtung verläuft. Die Proben werden genau ausgemessen (die Kantenlänge L0 wird für jede Maschinenrichtung TD und MD bestimmt, L0 TD und L0 MD) und 15 min bei der angegeben Schrumpfungstemperatur (hier 150 °C) in einem Umlufttrockenschrank getempert. Die Proben werden entnommen und bei Raum-temperatur genau ausgemessen (Kantenlänge LTD und LMD). Der Schrumpf ergibt sich aus der Gleichung:

$$\text{Schrumpf [\%] MD} = 100 \cdot (\text{L0 MD} - \text{LMD}) / \text{L0 MD}$$

$$\text{Schrumpf [\%] TD} = 100 \cdot (\text{L0 TD} - \text{LTD}) / \text{L0 TD}$$

*Ofentest*

Ein Folienstück wird in einen Umluftofen eingebracht, der auf 180 °C vorgeheizt wurde. Die Folie wird dabei auf ein Drahtnetz (Maschenweite 0,25 - 2 cm) gelegt. Die Folie verbleibt für 90 Minuten bei 180 °C im Ofen. Anschließend werden die mechanischen Eigenschaften, der Schrumpf, die Farbkennzahlen und der SV wie beschrieben bestimmt.

*Haftung auf Aluminium*

Aluminiumblech mit Cr(III)-Vorbehandlung wird auf 200 °C aufgeheizt und die Folie unter Druck auf dieses Blech laminiert. Danach wird das Laminat für 10 s auf 250 °C erhitzt. Dieses Material wird dann in Kontakt mit 3 %iger Essigsäure für 30 min auf 100 °C erwärmt. Anschließend wird an der Folienseite eine Gitterschnittprüfung nach DIN EN ISO 2409 durchgeführt. Das Ergebnis wird mit Noten von 0 (sehr gut) bis 5 (sehr schlecht) bewertet.

*Messung der Kristallinität*

Die Kristallinität der jeweiligen Folienseite wird aus dem Verhältnis der Intensitäten der Banden bei 1040 cm$^{-1}$ und 1337 cm$^{-1}$ im ATR-Spektrum bestimmt (ATR = Attenuated Total Reflection), wobei die Intensitäten auf die Bande bei 1117 cm$^{-1}$ normiert sind. Die Bande bei 1040 cm$^{-1}$ ist amorphem Polyester; die bei 1337 cm$^{-1}$ ist kristallinem Polyester zuzuordnen (Polymer Letters Edition, Vol. 12 (1974), S. 13-19).

Für amorphe Schichten gilt: $\dfrac{I_{1040cm^{-1}}}{I_{1337cm^{-1}}} > 2,2$

Für kristalline Schichten gilt: $\dfrac{I_{1040cm^{-1}}}{I_{1337cm^{-1}}} < 1,5$

Die Messung erfolgt mit einem IR-Spektrometer IFS28 der Firma Bruker (Karlsruhe, DE) unter Verwendung eines Diamant-ATR-Kristalls.

Die Aufnahme des ATR-Spektrums kann direkt an der beschichteten Folie vorgenommen werden. Es wird angenommen, dass die Beschichtung bis zu einer Dicke von 0,1 μm keinen Einfluss auf das Spektrum der Deckschicht hat. Sollten hieran Zweifel bestehen, kann die Beschichtung vor der Aufnahme des ATR-Spektrums entfernt werden.

*Farbwerte*

Die Farbkennzahlen L*, a*, b* werden mit dem Messgerät Color-Sphere der Fa. Byk-Gardner (US) in Transmission für die Einzellagen und die Lagenpakete gemäß der Norm DIN 1674 bzw. ASTM D2244 gemessen. Die verwendete Geometrie ist d/8 mit Glanz, der Messbereich ist 400-700 nm, die spektrale Auflösung ist 20 nm, die verwendete Lichtart ist D65, der verwendete Beobachter ist 10°, der Durchmesser der Messblende liegt bei 30 mm.

Im Folgenden wird die Erfindung anhand von Beispielen näher erläutert.

**Beispiele**

Zur Herstellung der nachfolgend beschriebenen Folie wurden folgende Ausgangsmaterialien verwendet:

PET1 = Polyesterrohstoff aus Ethylenglykol und Terephthalsäure und Isophthalsäure, wobei der Anteil an Isophthalsäure im Polymer bei 4,5 Gew.% liegt mit einem SV Wert von 812 und DEG-Gehalt von 1,2 Gew.% (Diethylenglykolgehalt als Monomer). Hergestellt mittels PTA Verfahren. Katalysator Kaliumtitanyloxalat mit 18 ppm Titan. Umesterungskatalysator Zinkacetat.

PET2 = Polyesterrohstoff aus Ethylenglykol und Terephthalsäure und Isophthalsäure, wobei der Anteil an Isophthalsäure im Polymer bei 23 Gew.% liegt mit einem SV Wert von 820, einem DEG-Gehalt von 1,4 Gew.% (Diethylenglykolgehalt als Monomer) und einem Gehalt von 5000 ppm Irganox 1010, CAS-Nr. 6683-19-8 (Hersteller BASF Schweiz). Die Zugabe des Irganox 1010 erfolgte zu Beginn der Polykondensation. Hergestellt mittels PTA Verfahren. Katalysator Kaliumtitanyloxalat mit 18 ppm Titan. Umesterungskatalysator Zinkacetat.

PET3 = Polyesterrohstoff aus Ethylenglykol und Terephthalsäure und Isophthalsäure, wobei der Anteil an Isophthalsäure im Polymer bei 33 Gew.% liegt mit einem SV Wert von 810 und DEG-Gehalt von 1,4 Gew.% (Diethylenglykolgehalt als Monomer). Hergestellt mittels PTA Verfahren. Katalysator Kaliumtitanyloxalat mit 18 ppm Titan. Umesterungskatalysator Zinkacetat.

PET4 = Polyethylentererphthalatrohstoff aus Ethylenglykol und Terephthalsäure mit einem SV Wert von 825, einem DEG-Gehalt von 0,9 Gew.% (Diethylenglykolgehalt als Monomer) und einem Gehalt von 5000 ppm Irganox 1010, CAS-Nr. 6683-19-8 (Hersteller BASF Schweiz). Die Zugabe des Irganox 1010 erfolgte zu Beginn der Polykondensation. Hergestellt mittels PTA Verfahren. Katalysator Kaliumtitanyloxalat mit 18 ppm Titan. Umesterungskatalysator Zinkacetat.

PET5 = Polyethylentererphthalatrohstoff aus Ethylenglykol und Dimethylterephthalat mit einem SV Wert von 820 und DEG-Gehalt von 0,9 Gew.% (Diethylenglykolgehalt als Monomer) und 1,5 Gew.% Siliziumdioxid-Pigment Sylobloc 46 mit einem d50 von 2,5 $\mu$m. Hergestellt mittels PTA Verfahren. Katalysator Kaliumtitanyloxalat mit 18 ppm Titan. Umesterungskatalysator Zinkacetat.

PET6 = 10000 ppm Irganox 1010, CAS-Nr. 6683-19-8 (Hersteller BASF Schweiz) eingearbeitet mittels eines Zweischneckenextruders in PET1. SV-Wert von 695.

PET7 = Polyethylentererphthalatrohstoff aus Ethylenglykol und Dimethylterephthalat mit einem DEG-Gehalt von 0,9 Gew.% (Diethylenglykolgehalt als Monomer) hergestellt mittels PTA Verfahren. Katalysator Kaliumtitanyloxalat mit 18 ppm Titan. Umesterungskatalysator Zinkacetat. Festphasenkondensiert auf einen SV Wert von 1100.

PET8 = 60 Gew.% Titandioxid-Pigment mit einem d50 von 0,2 $\mu$m eingearbeitet mittels eines Zweischneckenextruders in PET7. SV-Wert von 510.

**Beispiel 1:**

Deckschicht (A):

| | |
|---|---|
| 35 Gew.-% | PET3 |
| 60 Gew.-% | PET2 |
| 5 Gew.-% | PET5 |

Basisschicht (B):

| 90 Gew.-% | PET1 |
| 10 Gew.-% | PET4 |

Deckschicht (C), Mischung aus:

| 80 Gew.-% | PET1 |
| 10 Gew.-% | PET4 |
| 10 Gew.-% | PET5 |

Beschichtung auf Deckschicht (A):

2,0 Gew.-% 3-Aminopropyltrimethoxysilan in Wasser

3-Aminopropyltrimethoxysilan wurde langsam unter Rühren in entionisiertes Wasser gegeben und vor Verwendung für 30 min gerührt.

Die o. g. Rohstoffe wurden in je einem Extruder pro Schicht aufgeschmolzen und durch eine dreischichtige Breitschlitzdüse auf eine gekühlte Abzugswalze extrudiert. Die so erhaltene amorphe Vorfolie wurde dann zunächst längsgestreckt. Die längsgestreckte Folie wurde in einem Coronaentladegerät coronabehandelt und danach durch Reversgravurbeschichtung mit der oben beschriebenen Lösung beschichtet. Danach wurde die Folie wurde bei einer Temperatur von 100°C getrocknet und anschließend quergestreckt, fixiert und aufgerollt (Enddicke der Folie 12,0 $\mu$m, Deckschichten je 1,1 $\mu$m). Die Bedingungen in den einzelnen Verfahrensschritten waren:

| Längsstreckung : | Temperatur: | 80 -115 °C |
| | Längsstreckverhältnis: | 4,0 |
| Querstreckung: | Temperatur: | 80 - 135 °C |
| | Querstreckverhältnis: | 4,1 |
| Fixierung: | | 2 s bei 225 °C |

Die Dicke der trockenen Beschichtung ist 12 nm.
Die Eigenschaften der so erhaltenen Folie sind in der Tabelle 1 widergegeben.

**Beispiel 2**

Es wurde wie in Beispiel 1 beschrieben vorgegangen. Die Rohstoffzusammensetzung war jetzt wie folgt:
Deckschicht (A):

| 50 Gew.-% | PET3 |
| 45 Gew.-% | PET2 |
| 5 Gew.-% | PET5 |

Basisschicht (B):

| 96 Gew.-% | PET1 |
| 4 Gew.-% | PET6 |

Deckschicht (C), Mischung aus:

| 86 Gew.-% | PET1 |
| 10 Gew.-% | PET4 |
| 4 Gew.-% | PET5 |

Beschichtung auf Deckschicht (A):

2,5 Gew.-% N-2-(Aminoethyl)-3-aminopropyltrimethoxysilan in Wasser N-2-(Aminoethyl)-3-aminopropyltrimethoxysilan wurde langsam unter Rühren in entionisiertes Wasser gegeben und vor Verwendung für 30 min gerührt.

Folie hat eine Gesamtdicke von 9,0 $\mu$m, die Deckschichten A und C sind beide 1,0 $\mu$m dick.

Die Dicke der trockenen Beschichtung ist 15 nm.

**Beispiel 3**

Es wurde wie in Beispiel 1 beschrieben vorgegangen. Die Rohstoffzusammensetzung war jetzt wie folgt:
Deckschicht (A):

| 50 Gew.-% | PET3 |
|-----------|------|
| 45 Gew.-% | PET2 |
| 5 Gew.-%  | PET5 |

Basisschicht (B):

| 50 Gew.-% | PET1 |
|-----------|------|
| 50 Gew.-% | Regenerat |

Deckschicht (C), Mischung aus:

| 80 Gew.-% | PET1 |
|-----------|------|
| 10 Gew.-% | PET4 |
| 10 Gew.-% | PET5 |

Beschichtung auf Deckschicht (A):

2,5 Gew.-% N-2-(Aminoethyl)-3-aminopropyltrimethoxysilan in Wasser N-2-(Aminoethyl)-3-aminopropyltrimethoxysilan wurde langsam unter Rühren in entionisiertes Wasser gegeben und vor Verwendung für 30 min gerührt.

Folie hat eine Gesamtdicke von 9,0 $\mu$m, die Deckschichten A und C sind beide 1,0 $\mu$m dick.

Die Dicke der trockenen Beschichtung ist 15 nm.

**Vergleichsbeispiel 1**

Es wurde eine 20 $\mu$m Folie hergestellt wie in EP-B-312304 beschrieben. Die Rohstoffzusammensetzung war wie folgt:

Deckschicht A: Copolyester mit 20 Gew.-% Ethylenisophthalat und 80 Gew.-% Ethylenterephthalat (84 % PET2 + 16 % PET1)

Basisschicht B: 98 Gew.-% Polyethylenterephthalat mit einem SV-Wert von 815 (wie PET7 aber nicht festphasenkondensiert) und 2 Gew.-% Antiblock-Masterbatch mit Silica (PET5).

Die Folie wurde hergestellt wie in Beispiel 1 beschrieben aber nicht beschichtet.

Die Haftung dieser Folie auf Aluminium ist nicht ausreichend. Wird diese Folie für ein Laminat mit Aluminium verwendet, muss die Temperatur beim Aufschmelzen der Folie so hoch gewählt werden, dass die mechanische Festigkeit des Aluminiums reduziert wird. Dieses Laminate kann somit nicht mehr tiefgezogen werden und ist ungeeignet für die Herstellung von Dosen.

Tabelle 1: Eigenschaften der Folien der Beispiele

| | Beispiel 1 | Beispiel 2 | Beispiel 3 | Vergleichsbeispiel 1 |
|---|---|---|---|---|
| Schmelzpunkt in °C | 246 | 244 | 243 | 254 |

**EP 3 228 456 B1**

(fortgesetzt)

| | Beispiel 1 | Beispiel 2 | Beispiel 3 | Vergleichsbespiel 1 |
|---|---|---|---|---|
| Haftung auf Aluminium, Gitterschnittprüfung | 0 | 0 | 0 | 3 |
| Kristallinität Deckschicht A | 3,3 | 3,5 | 3,5 | 3,4 |
| Kristallinität Deckschicht C | 1,1 | 1,1 | 1,1 | 0,9 |
| Δ b* nach Ofentest | 0,3 | 0,4 | 0,6 | 0,5 |
| SV nach Ofentest | 730 | 725 | 710 | 720 |
| Reißdehnung MD in % | 91 | 93 | 89 | 95 |
| Reißdehnung TD in % | 99 | 101 | 97 | 106 |
| Reißdehnung MD in % nach Ofentest | 90 | 91 | 90 | 94 |
| Reißdehnung TD in % nach Ofentest | 99 | 96 | 96 | 103 |

**Patentansprüche**

1. Mehrschichtige, biaxial orientierte Polyesterfolie, umfassend eine Basisschicht B, eine Deckschicht A und eine Deckschicht C, **dadurch gekennzeichnet, dass** die Deckschicht A amorph ist, die Basisschicht B sowie die Deckschicht C kristallin sind und wobei die kristalline Basisschicht B einen Schmelzpunkt von < 250 °C aufweist und (bezogen auf die Masse an Polyester in der Schicht) 2 bis 15 Gew.-% Isophthalat-abgeleitete Einheiten enthält und die amorphe Deckschicht A (bezogen auf die Masse an Polyester in der Schicht) mehr als 19 Gew.-% Isophthalat-abgeleitete Einheiten enthält,
wobei die Kristallinität der jeweiligen Folienseite aus dem Verhältnis der Intensitäten der Banden bei 1040 cm$^{-1}$ und 1337 cm$^{-1}$ im ATR-Spektrum bestimmt wird, wobei die Intensitäten auf die Bande bei 1117 cm$^{-1}$ normiert sind und wobei die Bande bei 1040 cm$^{-1}$ amorphem Polyester und die bei 1337 cm$^{-1}$ kristallinem Polyester zugeordnet ist und wobei für amorphe Schichten gilt:

$$\frac{I_{1040cm^{-1}}}{I_{1337cm^{-1}}} > 2,2$$

und
für kristalline Schichten gilt:

$$\frac{I_{1040cm^{-1}}}{I_{1337cm^{-1}}} < 1,5 \, .$$

2. Polyesterfolie nach Anspruch 1, **dadurch gekennzeichnet, dass** die Deckschicht A mit einer Silan-basierten Beschichtung versehen ist.

3. Polyesterfolie nach Anspruch 1 oder 2, **dadurch gekennzeichnet, dass** der Polyester der Basisschicht B zu mindestens 85 Gew.-%, bevorzugt mindestens 90 Gew.-%, besonders bevorzugt mindestens 92 Gew.-% aus Ethylenterephthalat-abgeleiteten Einheiten besteht (jeweils bezogen auf die Gesamtmasse an Polyester).

4. Polyesterfolie nach Anspruch 1, 2 oder 3, **dadurch gekennzeichnet, dass** der Polyester der Basisschicht B bevorzugt zu 3 bis 10 Gew.-%, besonders bevorzugt 4 bis 8 Gew.-% aus Ethylenisophthalat-abgeleiteten Einheiten besteht.

5. Polyesterfolie nach einem der Ansprüche 1 bis 4, **dadurch gekennzeichnet, dass** die Summe aus Ethylenterephthalat-abgeleiteten Einheiten und Ethylenisophthalat-abgeleiteten Einheiten mindestens 95 Gew.-% des Polyesters beträgt.

6. Polyesterfolie nach Anspruch 3, **dadurch gekennzeichnet, dass** der Polyester der Basisschicht B anstelle der Isophthalat- und Terephthalat-abgeleiteten Einheiten aus 70 bis 85 Gew.-% Ethylenterephthalat- und 15 bis 30 Gew.-% Butylenterephthalat-abgeleiteten Einheiten besteht.

7. Polyesterfolie nach einem der Ansprüche 1 bis 6, **dadurch gekennzeichnet, dass** die amorphe Deckschicht A zu mindestens 19 Gew.-%, bevorzugt mindestens 23 Gew.-%, besonders bevorzugt mindestens 27 Gew.-% aus Ethylenisophthalat-abgeleiteten Einheiten und zu bis zu 81 Gew.-%, bevorzugt 77 Gew.-%, besonders bevorzugt 73 Gew.-% aus Ethylenterephthalat-abgeleiteten Einheiten (jeweils bezogen auf die Gesamtmasse an Polyester in der Deckschicht A) besteht.

8. Polyesterfolie nach einem der Ansprüche 1 bis 7, **dadurch gekennzeichnet, dass** die Deckschicht C 0,05 Gew.-% oder mehr, bevorzugt 0,10 Gew.-% oder mehr und besonders bevorzugt 0,15 Gew.-% oder mehr inerte Partikel enthält.

9. Polyesterfolie nach einem der Ansprüche 1 bis 8, **dadurch gekennzeichnet, dass** die Folie 50 -10000 ppm, bevorzugt 100 - 5000 ppm und insbesondere 150 -1200 ppm eines Radikalfängers enthält und bevorzugt die Deckschicht C mindestens 300 ppm, bevorzugt mindestens 500 ppm und besonders bevorzugt mindestens 800 ppm an Radikalfänger enthält.

10. Polyesterfolie nach Anspruch 9, **dadurch gekennzeichnet, dass** der Radikalfänger ausgewählt wird aus einer oder mehreren der Verbindungen mit den CAS-Nr. 1709-70-2, 6683-19-8 und 57569-40-1, insbesondere CAS-Nr. 1709-70-2 und 6683-19-8.

11. Polyesterfolie nach einem der Ansprüche 1 bis 10, **dadurch gekennzeichnet, dass** die Deckschicht (A) mit einem funktionellen Silan beschichtet ist, welches bevorzugt ein aminofunktionelles Silan ist, welches besonders bevorzugt im unhydrolysierten Zustand eine Verbindung der Formel

$$(R^1)_a Si (R^2)_b (R^3)_c$$

ist, worin

R$^1$ eine nicht hydrolysierbare funktionelle Gruppe mit mindestens einer primären Aminogruppe,
R$^2$ eine hydrolysierbare Gruppe, wie eine niedere Alkoxygruppe, eine Acetoxygruppe oder ein Halogenid, und
R$^3$ eine unreaktive, nicht hydrolysierbare Gruppe, wie eine niedere Alkylgruppe oder eine Phenylgruppe, bedeutet;
a größer oder gleich 1;
b größer oder gleich 1;
c größer oder gleich null und

a+b+c=4 ist und
niedere Alky- oder Alkoxygruppen solche mit 1 bis 4 C-Atomen sind und Halogenide Fluor, Chlor, Brom oder Jod sind.

12. Polyesterfolie nach einem der Ansprüche 1 bis 11, **dadurch gekennzeichnet, dass** sie 5 - 20 μm dick ist.

13. Verfahren zur Herstellung einer Polyesterfolie nach Anspruch 1, wobei zunächst der die Polyestermischungen der Schichten A, B und C in mehreren Extrudern komprimiert und verflüssigt werden, die Schmelzen in einer Mehrschichtdüse zu einem flachen Schmelzefilm ausgeformt werden, der dann auf einer Kühlwalze und einer oder mehreren Abzugswalzen als Vorfolie abgezogen wird, wobei diese abkühlt und sich verfestigt und anschließend biaxial orientiert und während dessen gegebenenfalls auf der Deckschichtseite A beschichtet wird, **dadurch gekennzeichnet, dass**

- die Folientemperaturen im Streckprozess 10 bis 60 °C über der Glasübergangstemperatur Tg des verwendeten Polyesters liegen,
- das Streckverhältnis der Längsstreckung bei 2,5 bis 5,0, und
- das der Querstreckung bei 3,0 bis 5,0 liegt, und
wobei die Längsstreckung gleichzeitig mit der Querstreckung (Simultanstreckung) oder in jeder denkbaren Sequenzfolge durchgeführt wird, und die Thermofixierung der Folie bei Ofentemperaturen von 180 bis 235 °C durchgeführt wird; und wobei

die Basisschicht B und die Deckschicht C kristallin sind und die Basisschicht B (bezogen auf die Masse an Polyester) 2 bis 15 Gew.-% Isophthalat-abgeleitete Einheiten enthält und die amorphe Deckschicht A (bezogen auf die Masse an Polyester) mehr als 19 Gew.-% Isophthalat-abgeleitete Einheiten enthält und wobei die Deckschicht A gegebenenfalls mit einer Silan-basierten Beschichtung versehen ist.

14. Verwendung einer Folie nach einem der Ansprüche 1-12 zur Laminierung mit Blechen, die bevorzugt zur Herstellung von Deckeln für Getränkedosen verwendet werden.

15. Verwendung nach Anspruch 14, wobei das Blech ein Aluminiumblech ist.

**Claims**

1. Multilayer, biaxially oriented polyester film comprising a base layer B, an outer layer A and an outer layer C, **characterized in that** the outer layer A is amorphous, the base layer B and the outer layer C are crystalline, and where the crystalline base layer B has a melting point of < 250 °C and comprises (based on the mass of polyester in the layer) from 2 to 15 % by weight of isophthalate-derived units and the amorphous outer layer A comprises (based on the mass of polyester in the layer) more than 19 % by weight of isophthalate-derived units,
   where the crystallinity of the respective film side is determined in the ATR spectrum from the ratio of the intensities of the bands at 1040 cm$^{-1}$ and 1337 cm$^{-1}$, where the intensities of the bands are standardized at 1117 cm$^{-1}$ and where the bands at 1040 cm$^{-1}$ are attributed to amorphous polyester and the bands at 1337 cm$^{-1}$ are attributed to crystalline polyester and
   where, for amorphous layers,

$$\frac{I_{1040\,cm^{-1}}}{I_{1337\,cm^{-1}}} > 2.2$$

   and
   for crystalline layers,

$$\frac{I_{1040\,cm^{-1}}}{I_{1337\,cm^{-1}}} < 1.5.$$

2. Polyester film according to Claim 1, **characterized in that** the outer layer A has a silane-based coating.

3. Polyester film according to Claim 1 or 2, **characterized in that** the polyester of the base layer B is comprised of at least 85 % by weight, preferably at least 90 % by weight, particularly preferably at least 92 % by weight, of ethylene-terephthalate-derived units (based in each case on the total mass of polyester).

4. Polyester film according to Claim 1, 2 or 3, **characterized in that** the polyester of the base layer B is preferably composed of from 3 to 10 % by weight, particularly from 4 to 8 % by weight, of ethylene-isophthalate-derived units.

5. Polyester film according to any of Claims 1 to 4, **characterized in that** the entirety of ethylene-terephthalate-derived units and ethylene-isophthalate-derived units amounts to at least 95 % by weight of the polyester.

6. Polyester film according to Claim 3, **characterized in that**, instead of the isophthalate- and terephthalate-derived units, the polyester of the base layer B is composed of from 70 to 85 % by weight of ethylene-terephthalate-derived units and 15 to 30 % by weight of butylene-terephthalate-derived units.

7. Polyester film according to any of Claims 1 to 6, **characterized in that** the amorphous outer layer A is composed of at least 19 % by weight, preferably at least 23 % by weight, particularly preferably at least 27 % by weight, of ethylene-isophthalate-derived units and of up to 81 % by weight, preferably 77 % by weight, and particularly preferably 73 % by weight, of ethylene-terephthalate-derived units (based in each case on the total mass of the polyester in the outer layer A) .

8. Polyester film according to any of Claims 1 to 7, **characterized in that** the outer layer C comprises at least 0.05 % by weight, preferably at least 0.10 % by weight and particularly preferably at least 0.15 % by weight, of inert particles.

9. Polyester film according to any of Claims 1 to 8, **characterized in that** the film comprises from 50 to 10 000 ppm, preferably from 100 to 5000 ppm and in particular from 150 to 1200 ppm, of a free-radical scavenger and preferably the outer layer C comprises at least 300 ppm, preferably at least 500 ppm and particularly preferably at least 800 ppm, of free-radical scavenger.

10. Polyester film according to Claim 9, **characterized in that** the free-radical scavenger is selected from one or more of the compounds with the CAS numbers 1709-70-2, 3135-18-0, 6683-19-8 and 57569-40-1, in particular CAS numbers 1709-70-2 and 6683-19-8.

11. Polyester film according to any of Claims 1 to 10, **characterized in that** the outer layer (A) has been coated with a functional silane which is preferably an amino-functional silane which in the unhydrolyzed state is particularly preferably a compound of the formula

$$(R^1)_a Si(R^2)_b (R^3)_c,$$

in which

R$^1$ is a non-hydrolysable functional group having at least one primary amino group,
R$^2$ is a hydrolysable group, for example a lower alkoxy group, an acetoxy group or a halide, and
R$^3$ is an unreactive, non-hydrolysable group, for example a lower alky group or a phenyl group;
a is greater than or equal to 1;
b is greater than or equal to 1;
c is greater than or equal to 0 and

a+b+c = 4 and
lower alkyl or alkoxy groups having from 1 to 4 carbon atoms, and
halides of fluoro, chloro, bromo or iodo.

12. Polyester film according to any of Claims 1 to 11, **characterized in that** its thickness is from 5 to 20 $\mu$m.

13. Process for the production of a polyester film according to Claim 1, where the polyester mixtures of the layers A, B and C are first compressed and liquefied in a plurality of extruders, the melts are shaped in a coextrusion die in a particularly flat melt film which is then drawn off on a chill roll and on one or more take-off rolls in the form of prefilm, and this is cooled and solidifies and then is biaxially oriented and optionally at the same time is coated on the outer layer side A, **characterized in that**

- the film temperatures in the stretching procedure are above the glass transition temperature Tg of the polyester used by from 10 to 60 °C,
- the stretching ratio of the longitudinal stretching is from 2.5 to 5.0, and
- that of the transverse stretching is from 3.0 to 5.0, and
where the longitudinal stretching is carried out simultaneously with the transverse stretching (simultaneous stretching) or in any conceivable chronological sequence, and the heat-setting of the film is carried out at oven temperatures of from 180 to 235 °C; and where
the base layer B and the outer layer C are crystalline and the base layer B comprises (based on the mass of polyester) from 2 to 15 % by weight of isophthalate-derived units and the amorphous outer layer A comprises (based on the mass of polyester) more than 19 % by weight of isophthalate-derived units, and where the outer layer A optionally has a silane-based coating.

14. Use of a film according to any of Claims 1-12 for lamination with metal sheets which are preferably used for the production of caps for drinks cans.

15. Use according to Claim 14, where the metal sheet is an aluminium sheet.

**Revendications**

1. Feuille en polyester multicouche, orientée de manière biaxiale, comprenant une couche de base B, une couche de recouvrement A et une couche de recouvrement C, **caractérisée en ce que** la couche de recouvrement A est amorphe, la couche de base B ainsi que la couche de recouvrement C sont cristallines et dans laquelle la couche de base cristalline B présente un point de fusion < 250 °C et (par rapport à la masse de polyester dans la couche) contient 2 à 15 % en poids d'unités dérivées de l'isophtalate et la couche de recouvrement amorphe A (par rapport à la masse de polyester dans la couche) contient plus de 19 % en poids d'unités dérivées d'isophtalate, dans laquelle la cristallinité du côté de feuille respectif est déterminée à partir du rapport des intensités des bandes à 1 040 cm$^{-1}$ et 1 337 cm$^{-1}$ dans le spectre ATR, dans laquelle les intensités sont normées sur les bandes à 1 117 cm$^{-1}$ et dans laquelle les bandes à 1 040 cm$^{-1}$ sont associées au polyester amorphe et celles à 1 337 cm$^{-1}$ sont associées au polyester cristallin et dans laquelle pour des couches amorphes cela vaut :

$$\frac{I_{1040cm^{-1}}}{I_{1337cm^{-1}}} > 2,2$$

et

pour des couches cristallines cela vaut :

$$\frac{I_{1040cm^{-1}}}{I_{1337cm^{-1}}} < 1,5 \,.$$

2. Feuille en polyester selon la revendication 1, **caractérisée en ce que** la couche de recouvrement A est pourvue d'un revêtement à base de silane.

3. Feuille en polyester selon la revendication 1 ou 2, **caractérisée en ce que** le polyester de la couche de base B consiste au moins en 85 % en poids, de préférence au moins en 90 % en poids, le plus préférentiellement au moins en 92 % en poids d'unités dérivées de téréphtalate d'éthylène (respectivement par rapport à la masse totale de polyester).

4. Feuille en polyester selon la revendication 1, 2 ou 3, **caractérisée en ce que** le polyester de la couche de base B consiste de préférence en 3 à 10 % en poids, le plus préférentiellement en 4 à 8 % en poids d'unités dérivées d'isophtalate d'éthylène.

5. Feuille en polyester selon l'une des revendications 1 à 4, **caractérisée en ce que** la somme d'unités dérivées de téréphtalate d'éthylène et d'unités dérivées d'isophtalate d'éthylène s'élève au moins à 95 % en poids de polyester.

6. Feuille en polyester selon la revendication 3, **caractérisée en ce que** le polyester de la couche de base B consiste à la place d'unités dérivées d'isophtalate et de téréphtalate en 70 à 85 % en poids d'unités de téréphtalate d'éthylène et en 15 à 30 % en poids d'unités dérivées de téréphtalate de butylène.

7. Feuille en polyester selon l'une des revendications 1 à 6, **caractérisée en ce que** la couche de recouvrement amorphe A consiste à au moins en 19 % en poids, de préférence au moins en 23 % en poids, le plus préférentiellement au moins en 27 % en poids d'unités dérivées d'isophtalate d'éthylène et en jusqu'à 81 % en poids, de préférence en 77 % en poids, le plus préférentiellement en 73 % en poids d'unités dérivées de téréphtalate d'éthylène (respectivement par rapport à la masse totale de polyester dans la couche de recouvrement A).

8. Feuille en polyester selon l'une des revendications 1 à 7, **caractérisée en ce que** la couche de recouvrement C contient 0,05 % en poids ou plus, de préférence 0,10 % en poids ou plus et le plus préférentiellement 0,15 % en poids ou plus de particules inertes.

9. Feuille en polyester selon l'une des revendications 1à 8, **caractérisée en ce que** la feuille contient 50 à 10 000 ppm, de préférence 100 à 5 000 ppm et en particulier 150 à 1 200 ppm d'un fixateur de radicaux et de préférence la couche de recouvrement C contient au moins 300 ppm, de préférence au moins 500 ppm et le plus préférentiellement au moins 800 ppm de fixateur de radicaux.

**10.** Feuille en polyester selon la revendication 9, **caractérisée en ce que** le fixateur de radicaux est sélectionné parmi un ou plusieurs des composés avec le numéro de CAS 1709-70-2, 3135-18-0, 6683-19-8 et 57569-40-1, en particulier le numéro de CAS 1709-70-2 et 6683-19-8.

**11.** Feuille en polyester selon l'une des revendications 1 à 10, **caractérisée en ce que** la couche de recouvrement (A) est revêtue d'un silane fonctionnel, qui est de préférence un silane aminofonctionnel, qui est le plus préférentiellement dans l'état non hydrolysé un composé de formule $(R^1)_a Si(R^2)_b (R^3)_c$, dans laquelle

$R^1$ est un groupe fonctionnel non hydrolysable avec au moins un groupe amino primaire,
$R^2$ un groupe hydrolysable tel qu'un groupe alcoxy faible, un groupe acétoxy ou un halogénure, et
$R^3$ un groupe non réactif, non hydrolysable tel qu'un groupe alkyle faible ou un groupe de phényle ;
a supérieur ou égal à 1 ;
b supérieur ou égal à 1 ;
c supérieur ou égal à zéro et

représente a+b+c=4 et des groupes alky ou alcoxy faibles sont ceux avec 1 à 4 atomes de C et des halogénures sont du fluor, chlore, brome ou iode.

**12.** Feuille en polyester selon l'une des revendications 1 à 11, **caractérisée en ce qu'**elle présente une épaisseur de 5 à 20 $\mu$m.

**13.** Procédé de fabrication d'une feuille en polyester selon la revendication 1, dans lequel tout d'abord les mélanges de polyester des couches A, B et C sont comprimés et liquéfiés dans plusieurs extrudeuses, les fontes sont démoulées dans une buse multicouche en un film de fonte plat qui est retiré ensuite sur un rouleau de refroidissement et un ou plusieurs rouleaux de retrait comme préfilm, dans lequel celui-ci refroidit et se consolide et est ensuite orienté de manière biaxiale et entre temps éventuellement revêtu sur le côté de couche de recouvrement A, **caractérisé en ce que**

- les températures de feuille se trouvent dans le processus d'étirage de 10 à 60 °C au-dessus de la température de transition du verre Tg du polyester utilisé,
- le rapport d'étirage de l'étirage longitudinal est de 2,5 à 5,0, et
- celui de l'étirage transversal est de 3,0 à 5,0, et
dans lequel l'étirage longitudinal est réalisé simultanément avec l'étirage transversal (étirage simultané) ou dans chaque suite séquentielle imaginable, et la thermofixation de la feuille est réalisée à des températures de four de 180 à 235 °C ; et dans lequel
la couche de base B et la couche de recouvrement C sont cristallines et la couche de base B (par rapport à la masse de polyester) contient 2 à 15 % en poids d'unités dérivées d'isophtalate et la couche de recouvrement A amorphe (par rapport à la masse de polyester) contient plus de 19 % en poids d'unités dérivées d'isophtalate et dans lequel la couche de recouvrement A est éventuellement pourvue d'un revêtement à base de silane.

**14.** Utilisation d'une feuille selon l'une des revendications 1 à 12 pour le laminage avec des tôles qui sont de préférence utilisées pour la fabrication de couvercles pour des canettes.

**15.** Utilisation selon la revendication 14, dans laquelle la tôle est une tôle d'aluminium.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 1465973 A
- EP 312304 B
- EP 474240 B
- EP 586161 A
- EP 2810776 A

**In der Beschreibung aufgeführte Nicht-Patentliteratur**

- **W. SHOTYK ; M. KRACHLER.** *Environ. Sci. Technol.,* 2007, vol. 41 (5), 1560-1563
- *CHEMICAL ABSTRACTS,* 1709-70-2
- Handbook of Thermoplastic Polyesters. Wiley-VCH, 2002
- Polyesters, Films. Encyclopedia of Polymer Science and Engeneering. John Wiley & Sons, 1988, vol. 12
- *Polymer Letters Edition,* 1974, vol. 12, 13-19